Europäisches Patentamt

European Patent Office

Office européen des brevets

(19)

(11) Numéro de publication : **0 328 432 B1**

(12) **FASCICULE DE BREVET EUROPEEN**

(45) Date de publication du fascicule du brevet :
09.10.91 Bulletin 91/41

(51) Int. Cl.⁵ : **A47J 27/00, H01R 9/22**

(21) Numéro de dépôt : **89400238.5**

(22) Date de dépôt : **27.01.89**

(54) **Socle en matière plastique pour récipient de cuisson électrique, procédé de fixation du câble d'alimentation à ce socle et récipient pourvu d'un tel socle.**

(30) Priorité : **05.02.88 FR 8801362**

(43) Date de publication de la demande :
**16.08.89 Bulletin 89/33**

(45) Mention de la délivrance du brevet :
**09.10.91 Bulletin 91/41**

(84) Etats contractants désignés :
**BE DE GB IT NL**

(56) Documents cités :
**EP-A- 0 104 512**
**DE-A- 2 514 604**

(56) Documents cités :
**FR-A- 1 338 296**
**US-A- 2 863 037**
**US-A- 3 931 494**
**PATENT ABSTRACTS OF JAPAN, vol. 7, no. 158 (E-186)[1303], 12 juillet 1983, page 91 E 186**

(73) Titulaire : **SEB S.A.**
**F-21260 Selongey (FR)**

(72) Inventeur : **Mauffrey, Guy**
**3 Impasse du Village Breuchotte**
**F-70280 Raddon (FR)**

(74) Mandataire : **Bouju, André**
**Cabinet André Bouju B.P. 6250**
**F-75818 Paris Cédex 17 (FR)**

EP 0 328 432 B1

Jouve, 18, rue Saint-Denis, 75001 PARIS

## Description

La présente invention concerne un socle en matière plastique pour récipient de cuisson électrique, comportant des moyens de fixation du câble d'alimentation électrique et des moyens pour connecter celui-ci aux organes électriques du récipient de cuisson.

L'invention vise également le procédé de fixation du câble d'alimentation électrique et de connexion des conducteurs de ce câble aux conducteurs destinés à être raccordés aux organes électriques d'un récipient de cuisson, ce procédé utilisant un socle conforme à l'invention.

L'invention vise en outre un récipient de cuisson tel que friteuse électrique, autocuiseur, poêles électriques ou mijoteuse et tout appareil électro-ménager équipé d'un socle conforme à l'invention.

Le socle des récipients de cuisson précités renferment les conducteurs destinés à être raccordés d'une part au câble d'alimentation électrique et d'autre part aux organes électriques tels que résistance de chauffage, thermostat et bouton de commande de l'appareil. Ce socle comporte également des moyens permettant de fixer le câble d'alimentation par serrage pour éviter qu'une traction exercée sur ce câble risque d'arracher les connexions électriques.

Dans les appareils connus, la fixation du câble d'alimentation et la connexion de ses conducteurs aux conducteurs reliés aux organes électriques du récipient de cuisson sont des opérations qui impliquent la manipulation de nombreuses pièces et qui sont délicates et longues. De plus, en cas de panne, il est nécessaire en général de démonter entièrement le socle pour accéder aux diverses connexions électriques.

Le but de la présente invention est de créer un socle pour récipient de cuisson électrique qui facilite considérablement la fixation et les connexions du câble électrique et qui évite d'avoir à démonter complètement ce socle en cas de réparation nécessitant de vérifier les connexions électriques.

Suivant l'invention, ce socle est caractérisé en ce que le fond du socle comporte une trappe articulée audit fond de façon à pouvoir pivoter entre une position dans laquelle cette trappe est en appui contre la face extérieure dudit fond et une position dans laquelle elle ferme une ouverture correspondante de ce fond, en ce que cette trappe comprend des moyens pour fixer le câble d'alimentation à cette trappe, ces moyens coopérant avec des moyens complémentaires prévus sur le socle, lorsque la trappe ferme l'ouverture du fond.

De préférence, cette trappe comporte en outre sur sa face intérieure des moyens de connexion pour connecter les conducteurs du câble d'alimentation aux conducteurs destinés à être raccordés aux organes électriques du récipient de cuisson.

Lorsque cette trappe est en position ouverte (en appui contre la face extérieure du fond), il est facile de raccorder les conducteurs du câble d'alimentation aux conducteurs destinés à être raccordés aux organes électriques du récipient de cuisson, en faisant passer ces derniers conducteurs dans l'ouverture dégagée par la trappe. Il suffit ensuite de fixer les extrémités raccordées des conducteurs sur la face apparente de la trappe puis de positionner le câble dans les moyens de fixation prévus à cet effet sur la trappe. Pour terminer on fait pivoter la trappe avec le câble et on fixe celle-ci au fond du socle. Dans cette position, le câble est fixé au socle et à la trappe et les conducteurs sont connectés entre eux sur la face de la trappe tournée vers l'intérieur du socle.

En cas de panne, il suffit d'ouvrir la trappe pour avoir accès aux connexions entre les différents conducteurs.

Selon une version avantageuse de l'invention, la trappe est articulée au fond au moyen d'une charnière en matière plastique moulée d'une seule pièce avec la trappe et le reste du socle.

On évite ainsi toute opération de montage de la trappe sur le socle.

Selon une version préférée de l'invention, les moyens pour fixer le câble d'alimentation comprennent sur l'extrémité de la trappe opposée à l'articulation, une gorge destinée à recevoir le câble d'alimentation, la paroi latérale du socle comportant en regard de l'articulation de la trappe une gorge complémentaire de celle de la trappe, ces deux gorges définissant entre elles un passage pour le câble.

De préférence, l'extrémité précitée de la trappe comprend des moyens qui coopèrent avec des moyens complémentaires prévus sur la paroi latérale du socle pour fixer par serrage le câble d'alimentation entre les deux gorges.

Ainsi, à l'aide de ces moyens de fixation complémentaires, on assure le serrage du câble en même temps que la fixation de la trappe.

Selon une version particulière de l'invention, la trappe comporte une cage de connexion permettant de raccorder les conducteurs du câble d'alimentation aux conducteurs destinés à être raccordés aux organes électriques du récipient de cuisson.

Cette cage de connexion réalisée d'une seule pièce avec la trappe facilite encore davantage les connexions des conducteurs.

Selon un autre aspect de l'invention, le procédé de fixation du câble d'alimentation électrique et de connexion des conducteurs de ce câble aux conducteurs destinés à être raccordés aux organes électriques d'un récipient de cuisson, ce procédé utilisant un socle conforme à l'invention est caractérisé par les étapes suivantes : la trappe étant dans la position dans laquelle elle est en appui contre la face extérieure du fond, on raccorde les conducteurs du câble aux conducteurs destinés à être raccordés aux organes électriques, en faisant passer les extrémités de ces derniers conducteurs par l'ouverture du fond, on fixe les extrémités raccordées de ces conducteurs sur la face apparente de la trappe, on positionne le câble sur les moyens de fixation prévus sur la trappe, on ferme la trappe et on fixe celle-ci au socle.

D'autres particularités et avantages de l'invention apparaîtront encore dans la description ci-après.

Aux dessins annexés donnés à titre d'exemples non limitatifs :

— la figure 1 est une vue en perspective montrant le dessous d'un socle de récipient de cuisson conforme à l'invention, la trappe étant en position ouverte,

— la figure 2 est une vue en coupe suivant le plan II-II de la figure 1,

— la figure 3 est une vue à échelle agrandie du détail A de la figure 2,

— la figure 4 est une vue analogue à la figure 2, la trappe étant en position de fermeture,

— la figure 5 est une vue en perspective à échelle agrandie de la trappe en position ouverte, montrant la mise en place du câble d'alimentation et de ses connexions,

— la figure 6 est une vue en perspective avec arrachement, montrant la trappe en position incomplètement fermée et illustrant la fixation par serrage du câble.

Dans la réalisation des figures annexées, on a représenté un socle en matière plastique pour une friteuse électrique. Ce socle comporte des moyens de fixation du câble d'alimentation électrique 1 et des moyens pour connecter celui-ci aux organes électriques tels que résistance, thermostat et bouton de commande de la friteuse.

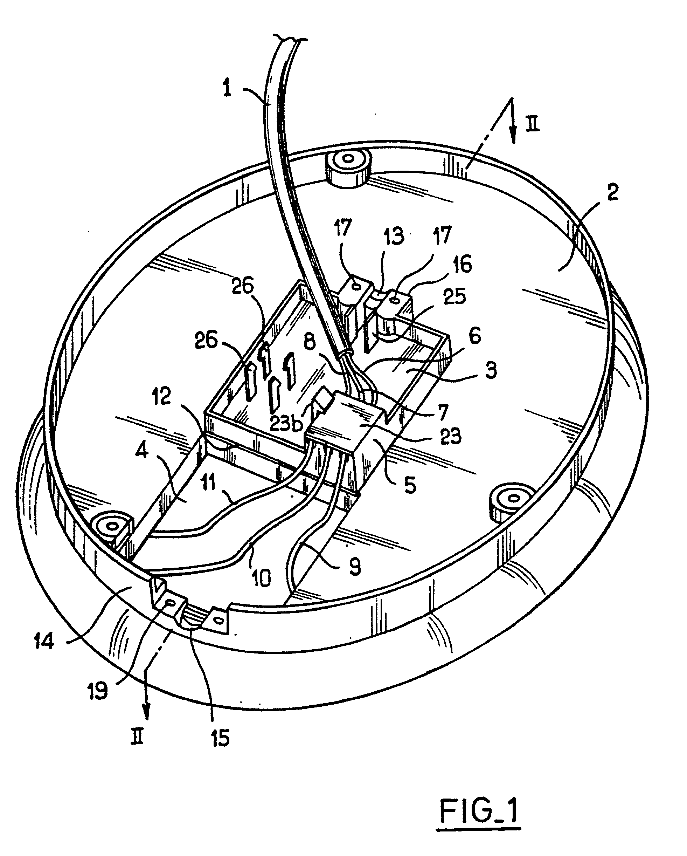

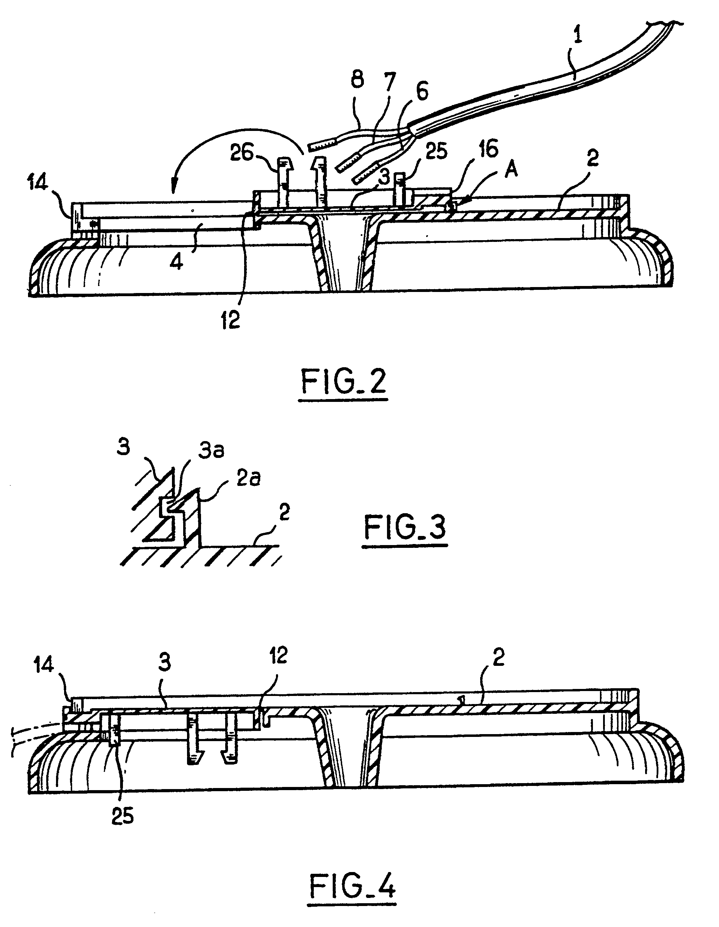

Conformément à l'invention, le fond 2 du socle comporte une trappe 3 articulée à ce fond 2 de façon à pouvoir pivoter entre une position (voir figures 1 et 2) dans laquelle cette trappe 3 est en appui contre la face extérieure dudit fond et une position (voir figure 4) dans laquelle elle ferme une ouverture 4 correspondante de ce fond.

Cette trappe 3 comprend sur sa face intérieure des moyens de connexion 5 pour connecter les conducteurs 6, 7, 8 du câble d'alimentation 1 aux conducteurs 9, 10, 11 destinés à être raccordés aux organes électriques (résistance chauffante, thermostat, bouton de commande) de la friteuse.

La trappe 3 porte en outre des moyens qui seront décrits plus en détail plus loin pour fixer le câble d'alimentation 1 à cette trappe 3, ces moyens coopérant avec des moyens complémentaires prévus sur le socle, lorsque la trappe ferme l'ouverture 4 du fond 2.

Dans la réalisation représentée, la trappe 3 est articulée au fond 2 au moyen d'une charnière en matière plastique 12 moulée d'une seule pièce avec la trappe 3 et le reste du socle. L'extrémité de la trappe 3 opposée à la charnière 12 présente une ouverture 3a dans laquelle est encliquetée (voir figure 3) un bec 2a solidaire du fond 2.

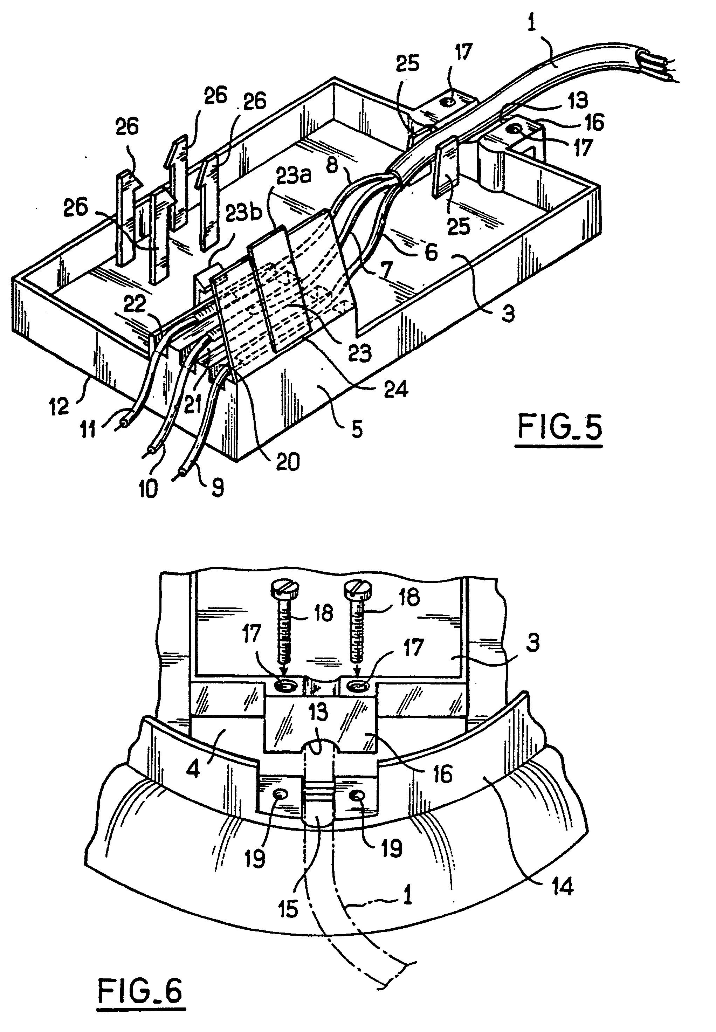

Les moyens pour fixer le câble d'alimentation 1 comprennent sur l'extrémité de la trappe 3 opposée à l'articulation 12 une gorge 13 (voir figures 1 et 5) recevant le câble d'alimentation 1. Par ailleurs, la paroi latérale 14 du socle comporte en regard de l'articulation 12 de la trappe 3 une gorge 15 complémentaire de celle de cette trappe, les deux gorges 13, 15 définissant entre elles, lorsque la trappe 3 est rabattue sur l'ouverture 4, un passage pour le câble 1 comme indiqué sur la figure 6.

La gorge 13 est ménagée dans une partie en saillie 16 qui présente deux trous 17 destinés à recevoir des vis 18 (voir figure 6).

De même, de part et d'autre de la gorge 15, sont pratiqués deux trous 19 (voir figure 6) situés au droit des trous 17 lorsque la trappe est rabattue sur l'ouverture 4.

Les vis 18 engagées dans les trous 17 et 19 permettent de fixer la trappe 3 à la paroi latérale 14 du socle tout en serrant le câble 1 entre les gorges 13 et 15.

On voit sur la figure 5 que la trappe 3 comporte près de la charnière 12 et dans l'un de ses coins, une cage de connexion 5 permettant de raccorder les conducteurs 6, 7, 8 du câble d'alimentation 1 aux conducteurs 9, 10, 11 destinés à être raccordés aux organes électriques de la friteuse.

Cette cage 5 comporte des logements 20, 21, 22 pour le positionnement des conducteurs 6, 7, 8, 9, 10, 11 et un volet articulé 23 pouvant être rabattu sur les conducteurs en position dans les logements précités.

On voit sur la figure 5 que le volet 23 est articulé à la cage 5 par une charnière 24 moulée d'une seule pièce avec ce volet 23 et cette cage 5.

Ce volet 23 présente à son extrémité opposée à la charnière 24 une patte 23a pouvant se verrouiller à un bec d'encliquetage 23b. En position verrouillée, le volet 23 maintient en position les extrémités connectées entre elles des conducteurs 6, 7, 8 et 9, 10, 11.

Par ailleurs, la trappe 3 porte en avant de la gorge 13 deux pattes 25 permettant de guider le câble 1.

D'autre part, la trappe 4 porte à côté de la cage de connexion 5 quatre griffes 26 permettant de fixer par encliquetage un domino de connexion classique, lorsque la cage de connexion 5 n'est pas utilisée.

Pour fixer le câble d'alimentation électrique 1 et connecter les conducteurs 6, 7, 8 de ce câble aux conducteurs 9, 10, 11, destinés à être raccordés aux organes électriques de la friteuse, on procède de la façon suivante :

La trappe 3 étant dans la position représentée sur les figures 1, 2, 5 dans laquelle elle est en appui contre la face extérieure du fond 2, on raccorde les conducteurs 6, 7, 8 du câble 1 aux conducteurs 9, 10, 11 destinés à être raccordés aux organes électriques, en faisant passer les extrémités de ces derniers conducteurs par l'ouverture 4 du fond 2, on place les extrémités raccordées de ces conducteurs 6, 7, 8 ; 9, 10, 11 dans les logements 20, 21, 22 de la cage de connexion 5, on rabat le volet 23 puis on place le câble 1 dans la gorge 13. On rabat ensuite la trappe 3 sur l'ouverture 4 du fond. Le câble 1 vient alors se loger dans la gorge 15 ménagée dans la paroi latérale 14 du socle. Il suffit alors de visser les vis 18 dans les trous 17 et 19 (voir figure 6) pour serrer le câble 1 entre les gorges 13 et 15.

En cas de panne électrique de la friteuse, il suffit de dévisser les vis 18 puis d'ouvrir la trappe 3 pour l'amener dans la position représentée sur la figure 5.

Dans cette position, il est possible d'inspecter les connexions entre les conducteurs 6, 7, 8, 9, 10, 11 en soulevant le volet 23 de la cage de connexion 5.

De la description précitée, il ressort donc que la fixation du câble 1 au socle de la friteuse ainsi que la connexion de ce câble 1 aux autres conducteurs de la friteuse, sont très aisées puisque les opérations ne nécessitent aucun assemblage autre que celui de la fixation de la trappe 3 à la paroi latérale 14 du socle.

Une fois que la fixation du câble 1 et que les connexions précitées sont réalisées, le socle constitue un sous-ensemble qui est prêt à être fixé à la cuve de la friteuse.

Bien entendu, l'invention n'est pas limitée à l'exemple que l'on vient de décrire et on peut apporter à celui-ci de nombreuses modifications sans sortir du cadre de l'invention.

Ainsi, les vis 18 pourraient être remplacées par un système de fixation par encliquetage.

## Revendications

1. Socle en matière plastique pour récipient de cuisson électrique, comportant des moyens de fixation du câble d'alimentation (1) électrique et des moyens (5) pour connecter celui-ci aux organes électriques du récipient de cuisson, caractérisé en ce que le fond (2) du socle comporte une trappe (3) articulée audit fond de façon à pouvoir pivoter entre une position dans laquelle cette trappe (3) est en appui contre la face extérieure dudit fond (2) et une position dans laquelle elle ferme une ouverture (4) correspondante de ce fond, en ce que cette trappe (3) comprend des moyens (13, 17) pour fixer le câble d'alimentation (1) à cette trappe (3), ces moyens coopérant avec des moyens complémentaires (15, 19, 18) prévus sur le socle, lorsque la trappe ferme l'ouverture (4) du fond (2).

2. Socle conforme à la revendication 1, caractérisé en ce que la trappe (3) comprend sur sa face intérieure des moyens de connexion (5) pour connecter les conducteurs (6, 7, 8) du câble d'alimentation (1)

aux conducteurs (9, 10, 11) destinés à être raccordés aux organes électriques du récipient de cuisson.

3. Socle conforme à l'une des revendications 1 ou 2, caractérisé en ce que la trappe (3) est articulée au fond (2) au moyen d'une charnière (12) en matière plastique moulée d'une seule pièce avec la trappe et le reste du socle.

4. Socle conforme à l'une des revendications 1 à 3, caractérisé en ce que les moyens pour fixer le câble d'alimentation comprennent sur l'extrémité de la trappe (3) opposée à l'articulation (12), une gorge (13) destinée à recevoir le câble d'alimentation (1), en ce que la paroi latérale (14) du socle comporte en regard de l'articulation (12) de la trappe une gorge (15) complémentaire de celle de la trappe, ces deux gorges (13, 15) définissant entre elles un passage pour le câble (1).

5. Socle conforme à la revendication 4, caractérisé en ce que l'extrémité précitée de la trappe (3) comprend des moyens (17) qui coopèrent avec des moyens complémentaires (18, 19) prévus sur la paroi latérale (14) du socle pour fixer par serrage le câble d'alimentation (1) entre les deux gorges (13, 15).

6. Socle conforme à la revendication 5, caractérisé en ce que lesdits moyens comprennent des trous (17, 19) pratiqués de part et d'autre des gorges (13, 15) pour recevoir des vis de serrage (18).

7. Socle conforme à l'une des revendications 1 à 6, caractérisée en ce que la trappe (3) comporte une cage de connexion (5) permettant de raccorder les conducteurs (6, 7, 8) du câble d'alimentation (1) aux conducteurs (9, 10, 11) destinés à être raccordés aux organes électriques du récipient de cuisson.

8. Socle conforme à la revendication 7, caractérisé en ce que ladite cage (5) comporte des logements (20, 21, 22) pour le positionnement des conducteurs (6, 7, 8 ; 9, 10, 11) et un volet articulé (23) pouvant être rabattu sur les conducteurs en position dans lesdits logements.

9. Socle conforme à la revendication 8, caractérisé en ce que le volet (23) est articulé à la cage (5) par une charnière (24) moulée d'une seule pièce avec ledit volet et ladite cage.

10. Socle conforme à l'une des revendications 8 ou 9, caractérisé en ce que des moyens (23a, 23b) sont prévus pour verrouiller de façon encliquetable le volet (23) sur la cage (5).

11. Socle conforme à l'une des revendications 1 à 10, caractérisé en ce que la trappe (3) porte des griffes (26) de fixation pour un domino de connexion.

12. Procédé de fixation du câble d'alimentation électrique (1) et de connexion des conducteurs (6, 7, 8) de ce câble aux conducteurs (9, 10, 11) destinés à être raccordés aux organes électriques d'un récipient de cuisson, ce procédé utilisant un socle conforme à l'une des revendications 1 à 10, caractérisé par les étapes suivantes :

la trappe (3) étant dans la position dans laquelle elle est en appui contre la face extérieure du fond (2), on raccorde les conducteurs (6, 7, 8) du câble (1) aux conducteurs (9, 10, 11) destinés à être raccordés aux organes électriques, en faisant passer les extrémités de ces derniers conducteurs par l'ouverture (4) du fond (2), on fixe les extrémités raccordées de ces conducteurs sur la face apparente de la trappe (3), on positionne le câble (1) sur les moyens de fixation (13) prévus sur la trappe, on ferme la trappe (3) et on fixe celle-ci au socle.

13. Récipient de cuisson comportant un socle conforme à l'une des revendications 1 à 11.

## Patentansprüche

1. Kunststoffsockel für elektrisches Kochgefäß mit Mitteln zur Befestigung des Stromkabels (1) und Mitteln zu dessen Anschluß an die elektrischen Organe des Kochgefässes, dadurch gekennzeichnet, daß der Boden (2) des Sockels eine Bodenklappe (3) enthält, die so an diesen Boden angelenkt ist, daß sie zwischen einer Stellung, in der diese Bodenklappe (3) gegen die Außenseite dieses Bodens (2) anliegt und einer Stellung in der sie eine entsprechende Öffnung (4) dieses Bodens verschließt, hin- und herschwenken kann, dadurch, daß diese Bodenklappe (3) Mittel (13, 17) zum Anschluß des Stromkabels (1) an diese Bodenklappe (3) umfaßt, wobei diese Mittel mit auf dem Sockel vorgesehenen ergänzenden Mitteln (15, 19, 18) zusammenwirken, wenn die Bodenklappe die Öffnung (4) des Bodens (2) verschließt.

2. Sockel nach Anspruch 1, dadurch gekennzeichnet, daß die Bodenklappe (3) auf ihrer Innenseite Anschlußmittel (5) umfaßt, um die Leiter (6, 7, 8) des Stromkabels (1) an die Leiter (9, 10, 11) anzuschließen, die dazu bestimmt sind, mit den elektrischen Organen des Kochgefässes verbunden zu werden.

3. Sockel nach einem der Ansprüche 1 oder 2, dadurch gekennzeichnet, daß die Bodenklappe (3) an den Boden (2) mittels eines Kunststoffscharniers (12) angelenkt ist, das mit der Bodenklappe und dem übrigen Sockel aus einem einzigen Stück geformt ist.

4. Sockel nach einem der Ansprüche 1 bis 3, dadurch gekennzeichnet, daß die Mittel zur Befestigung des Stromkabels auf dem Ende der Bodenklappe (3), das dem Gelenk (12) entgegengesetzt ist, eine Rille (13) umfassen, die dazu bestimmt ist, das Stromkabel (1) aufzunehmen, dadurch, daß die Seitenwand (14) des Sockels dem Gelenk (12) der Bodenklappe gegenüberstehend eine Rille (15) enthält, die diejenige der Bodenklappe ergänzt, wobei beide Rillen (13, 15) untereinander eine Durchführung für das Kabel (1) abgrenzen.

5. Sockel nach Anspruch 4, dadurch gekennzeichnet, daß das vorgenannte Ende der Bodenklappe (3) Mittel (17) umfaßt, die mit ergänzenden Mitteln (18, 19) zusammenwirken, die auf der Seitenwand (14) des Sockels vorgesehen sind, um das Stromkabel (1) zwischen den beiden Rillen (13, 15) durch Einklemmen zu befestigen.

6. Sockel nach Anspruch 5, dadurch gekennzeichnet, daß diese Mittel Löcher (17, 19) enthalten, die beiderseits der Rillen (13, 15) zur Aufnahme der Klemmschrauben (18) eingebohrt sind.

7. Sockel nach einem der Ansprüche 1 bis 6, dadurch gekennzeichnet, daß die Bodenklappe (3) einen Anschlußkäfig (5) umfaßt, der den Anschluß der Leiter (6, 7, 8) des Stromkabels (1) an die Leiter (9, 10, 11) gestattet, die dazu bestimmt sind, mit den elektrischen Organen des Kochgefässes verbunden zu werden.

8. Sockel nach Anspruch 7, dadurch gekennzeichnet, daß dieser Käfig (5) Lagerungen (20, 21, 22) für die Positionierung der Leiter (6, 7, 8 ; 9, 10, 11) und eine angelenkte Klappe (23) umfaßt, die auf die in diesen Lagerungen positionierten Leiter herabgeklappt werden kann.

9. Sockel nach Anspruch 8, dadurch gekennzeichnet, daß die Klappe (23) an den Käfig (5) mittels eines Scharniers (24) angelenkt ist, das mit dieser Klappe und diesem Käfig aus einem einzigen Stück geformt ist.

10. Sockel nach einem der Ansprüche 8 oder 9, dadurch gekennzeichnet, daß Mittel (23a, 23b) vorgesehen sind, um die Klappe (23) auf dem Käfig (5) einrastbar zu verriegeln.

11. Sockel nach einem der Ansprüche 1 bis 10, dadurch gekennzeichnet, daß die Bodenklappe (3) Befestigungsklauen (26) für eine Lüsterklemme umfaßt.

12. Verfahren zur Befestigung des Stromkabels (1) und zum Anschluß der Leiter (6, 7, 8) dieses Kabels an die Leiter (9, 10, 11), die dazu bestimmt sind, mit den elektrischen Organen eines Kochgefässes verbunden zu werden, wobei dieses Verfahren einen Sockel nach einem der Ansprüche 1 bis 10 verwendet, gekennzeichnet durch die folgenden Stufen: während die Bodenklappe (3) in der Stellung ist, in der sie gegen die Außenseite des Bodens (2) anliegt, schließt man die Leiter (6, 7, 8) des Kabels (1) an die Leiter (9, 10, 11) an, die dazu bestimmt sind, mit den elektrischen Organen verbunden zu werden, indem die Enden dieser letzteren Leiter durch die Öffnung (4) des Bodens (2) hindurchgeführt werden ; befestigt man die angeschlossenen Enden dieser Leiter auf der sichtbaren Seite der Bodenklappe (3) ; positioniert man das Kabel (1) auf den auf der Bodenklappe vorgesehenen Befestigungsmitteln (13) ; schließt man die Bodenklappe (3) und befestigt diese am Sockel.

13. Kochgefäß mit einem Sockel nach einem der Ansprüche 1 bis 11.

## Claims

1. A plastics base for an electrical cooking appliance, comprising fixing means for the electrical power supply cable (1) and means for connecting the same to the electrical components of the cooking appliance, characterised in that the bottom (2) of the base comprises a hatch (3) articulated to said bottom so as to be pivotable between a position in which said hatch (3) bears against the outer surface of said bottom (2) and a position in which it closes a corresponding aperture (4) in said bottom, in that said hatch (3) comprises means (13, 17) for fixing the power supply cable (1) to said hatch (3), said means co-operating with complementary means (15, 19, 18) provided on the base when the hatch closes the aperture (4) in the bottom (2).

2. A base according to claim 1, characterised in that the inner surface of the hatch (3) comprises connecting means (5) for connecting the conductors (6, 7, 8) of the power supply cable (1) to the conductors (9, 10, 11) intended for connection to the electrical components of the cooking appliance.

3. A base according to claim 1 or 2, characterised in that the hatch (3) is articulated to the bottom (2) by means of a plastic hinge (12) moulded integrally with the hatch and the rest of the base.

4. A base according to any one of claims 1 to 3, characterised in that the means for fixing the power supply cable comprise a groove (13) on that end of the hatch (3) which is remote from the articulation (12), said groove (13) being adapted to receive the power supply cable (1), in that the side wall (14) of the base comprises a groove (15) facing the hatch articulation (12), said groove (15) being complementary with that of the hatch, said two grooves (13, 15) together defining a passage for the cable (1).

5. A base according to claim 4, characterised in that the said end of the hatch (3) comprises means (17) co-operating with complementary means (18, 19) provided on the side wall (14) of the base in order to clamp the power supply cable (1) between the two grooves (13, 15).

6. A base according to claim 5, characterised in that the said means comprise holes (17, 19) formed on either side of the grooves (13, 15) to receive clamping screws (18).

7. A base according to any one of claims 1 to 6, characterised in that the hatch (3) comprises a connection box (5) for connection of the conductors (6, 7, 8) of the power supply cable (1) to the conductors (9, 10, 11) for connection to the electrical components of the cooking appliance.

8. A base according to claim 7, characterised in that the said box (5) comprises recesses (20, 21, 22) for positioning of the conductors (6, 7, 8 ; 9, 10, 11) and an articulated flap (23) adapted to fold down on to the conductors in position in said recesses.

9. A base according to claim 8, characterised in that the flap (23) is articulated to the box (5) by hinge (24) moulded integrally with said flap and said box.

10. A base according to claim 8 or 9, characterised in that means (23a, 23b) are provided to provide click-stop locking of the flap (23) on the box (5).

11. A base according to any one of claims 1 to 10, characterised in that the hatch (3) has fixing claws (26) for a connecting block.

12. A method of fixing the electrical power supply cable (1) and for connecting the conductors (6, 7, 8) of said cable to the conductors (9, 10, 11) for connection to the electrical components of a cooking appliance, such method using a base according to any one of claims 1 to 10, characterised by the following steps :
with the hatch (3) in the position in which it bears against the outer surface of the bottom (2), the conductors (6, 7, 8) of the cable (1) are connected to the conductors (9, 10, 11) for connection to the electrical components by passing the ends of the latter conductors through the aperture (4) in the bottom (2), the connected ends of these conductors are fixed on the visible surface of the hatch (3), the cable (1) is positioned on the fixing means (13) provided on the hatch, the hatch (3) is closed and fixed to the base.

13. A cooking appliance comprising a base according to any one of claims 1 to 11.

EP 0 328 432 B1

FIG_1

7

**FIG. 2**

**FIG. 3**

**FIG. 4**

FIG.5

FIG.6